# EUROPÄISCHE PATENTANMELDUNG

(11) **EP 3 819 798 A1**
(43) Veröffentlichungstag der Anmeldung: **12.05.2021**
(21) Anmeldenummer: 20200422.2
(22) Anmeldetag: 06.10.2020
(51) Int. Cl.: G06F 21/41, G06F 21/60, G06F 21/62, H04L 29/06, H04L 29/08, G06F 9/30

(54) **VERFAHREN UND SYSTEM ZUR AUSFÜHRUNG EINES IDENTITY UND ACCESS MANAGEMENT SYSTEMS**

(30) Priorität: 05.11.2019 DE 102019129762; 05.11.2019 DE 202019106136 U
(71) Anmelder: Service Layers GmbH, 80807 München (DE)
(72) Erfinder: Biermann, Jürgen, 82031 Grünwald (DE); Deckers, Daniel, 70176 Stuttgart (DE); Hobbs, Timothy Clayton, 08003 Barcelona (ES); Hülsken, Tobias, 70565 Stuttgart (DE); Hütter, Heiko, 73269 Hochdorf (DE); Priebe, Andre, 73760 Ostfildern (DE)
(74) Vertreter: LS-MP von Puttkamer Berngruber Loth Spuhler

(57) **Zusammenfassung**

Verfahren zur Ausführung eines Identity und Access Management Systems, bei dem wenigstens eine Schicht vorgesehen ist und ein Master-Computer mit wenigstens einem Slave-Computer kommuniziert,
- wobei der Master-Computer wenigstens eine Komponente umfasst, die jeweils als ein Rechenwerk und/oder als ein Speicherwerk und/oder als wenigstens eine Arbeitskomponente ausgebildet ist, wobei
- jeweils Einheiten der Funktionalität des Rechenwerks und/oder des Speicherwerks und/oder der weiteren Arbeitskomponente des Master-Computers erzeugt werden, und
- die jeweiligen Einheiten der Funktionalität des Rechenwerks und/oder des Speicherwerks und/oder der Funktionalität der weiteren Arbeitskomponente in einen Code übersetzt werden und in codierter Form vom Master-Computer zum Slave-Computer übertragen werden,
- wobei der Master-Computer mit Hilfe des Rechenwerks gesteuert wird, und zur Steuerung wenigstens ein Softwareprogrammprodukt arbeitet, wobei
- jeweils Einheiten der Funktionalität des Softwareprogrammprodukts in einen Code übersetzt werden und in codierter Form vom Master-Computer zum Slave-Computer übertragen werden,
- wobei das Rechenwerk und/oder das Speicherwerk und/oder die weitere Arbeitskomponente und/oder das Softwareprogrammprodukt des Master-Computers in Abhängigkeit wenigstens eines Parameters des wenigstens einen Slave-Computers konfiguriert werden, und
- die jeweilige Konfigurierung in einen Code übersetzt wird und in codierter Form vom Master-Computer zu dem Slave-Computer übertragen wird,
- wobei in einem Speicherwerk des Slave-Computers Daten und/oder Informationen eines Nutzers abgespeichert werden, und
- in einem Rechenwerk des Slave-Computers aus den Daten und/oder aus den Informationen ein persönliches Profil zur Identifizierung und/oder zur Authentifizierung und/oder zu Autorisierung des Nutzers erstellt wird,
- wobei die in einen Code übersetzten Einheiten der Funktionalität des Rechenwerks und/oder des Speicherwerks und/oder die in einen Code übersetzten Einheiten der Funktionalität der weiteren Arbeitskomponente und/oder des Softwareprogrammprodukts und/oder die Konfiguration vom Master-Computer in das Rechenwerk und/oder in das Speicherwerk und/oder in die weitere Arbeitskomponente sowie in wenigstens eine Laufzeitumgebung (Kubernetes) des Slave-Computers übertragen werden,
- wobei die Daten und/oder Informationen des Nutzers im Rechenwerk und/oder im Speicherwerk und/oder in der weiteren Arbeitskomponente des Slave-Computers mit Hilfe der übertragenen Funktionalitäten des Softwareprogrammprodukts be- und/oder verarbeitet werden,
- und die vom Master-Computer zum Slave-Computer übertragenen, in einen Code übersetzten Einheiten der Funktionalitäten auf das Rechenwerk und/oder das Speicherwerk und/oder auf die weitere Arbeitskomponente und/oder auf das Softwareprogrammprodukt des Slave-Computers einwirken.

## Beschreibung

Die Erfindung betrifft ein Verfahren und ein zugehöriges System zur Ausführung eines Identity und Access Management Systems. Bei dem Verfahren und dem System ist wenigstens eine Schicht zur Strukturierung von Informationen und/oder Daten vorgesehen. Bei dem Verfahren und dem zugehörigen System kommuniziert ein Master-Computer mit wenigstens einem Slave-Computer.

Aus der DE 2013 102 487 A1 ist ein Verfahren bekannt, mit dem ein Zugriff auf digitale Daten gesteuert wird.

Das Verfahren umfasst ein mobiles Endgerät mit einer Netzwerkschnittstelle. Es ist ein räumlich begrenztes Netzwerksegment vorgesehen, das eine netzwerktechnische Lösung bereitstellt. Die netzwerktechnische Lösung sichert zu, dass die Lokalisierung des mobilen Endgeräts stattfindet. Gleichfalls erfolgt die Identifikation des Netzwerksegmentes. Darüber hinaus ist ein Nutzungsserver angeordnet, der den Zugriff auf digitale Daten steuert und die Einhaltung spezifischer Rechte zusichert.

Identity und Access Management Verfahren sind im Stand der Technik für digitale Märkte bekannt. Diese stellen Funktionen bereit, um Anwendern den Zugriff auf IT-Systeme zu ermöglichen. Bei allen Identitäten geht es primär um Effizienz, Compliance, Benutzerfreundlichkeit und Sicherheit. Anwender können alle Inhaber digitaler Identitäten sein, zum Beispiel Consumer, Mitarbeiter, B2B-Partner, Alumni oder Bewerber.

Sie sind wichtig, um zum Beispiel Produkte und Dienstleistungen weltweit zuverlässig in die Märkte einführen zu können. Hierzu stehen oftmals nur sehr enge Zeitfenster zur Verfügung. Insbesondere bei digitalen Dienstleistungen ist der Faktor "time-to-market" ein entscheidender Erfolgsfaktor. Damit wird die Zeitspanne bezeichnet, mit der neue Produkte und/oder Dienstleistungen ab der Entwicklung in einen Markt eingeführt werden können.

Zusätzlich bieten digitale Plattformen die Möglichkeit, neue Geschäftsmodelle zu erproben und im Markt einzusetzen.

Die Geschwindigkeit und die Flexibilität, mit der sich die neuen Geschäftsmodelle im jeweiligen Markt implementieren lassen, ist ein entscheidender Wettbewerbsfaktor geworden.

Nicht minder wichtig ist die Geschwindigkeit, mit der sich die Geschäftsmodelle testen und/oder auf die jeweilige Marktgegebenheiten anpassen lassen. Ein weiterer Wettbewerbsfaktor besteht darin, mit welcher Geschwindigkeit sich ein neues Geschäftsmodell in eine bereits bestehende Infrastruktur integrieren lässt.

Die Schnittstellen zwischen dem in den Markt eingeführten Produkt und/oder der Dienstleistung und dem jeweiligen Anwender stellen ein neues Spannungsfeld dar. Hierbei ist zu klären, um wen es sich bei dem jeweiligen Anwender handelt. Die Identität des Anwenders muss zuverlässig bestätigt werden können. Darüber hinaus ist festzuhalten, wie sich eine konsistente Erfahrung des Anbieters mit dem neuen Produkt und/oder der neuen Dienstleistung über sämtliche zugehörigen Geräteschnittstellen festhalten lässt.

Hierzu ist es wesentlich, ein leistungsfähiges Identity und Access Management System (IAM) zu implementieren.

### Identity und Access Management (IAM)

Ein Identity und Access Management System stellt einen Rahmen bereit, in dem Strategien und Technologien umfasst sind, mit denen sichergestellt wird, dass die richtige Person, vorzugsweise in einem Unternehmen, über die erforderlichen Zugriffsrechte verfügt.

Mit der Autorisierung werden der jeweiligen Person bestimmte Rechte gegenüber Dritten eingeräumt. Durch die Authentifizierung führt die Person den Nachweis, dass ihm/ihr die oben genannten Rechte eingeräumt worden sind. Durch die Identifizierung stellt die Person sicher, dass er/sie wiederholbar von Dritten wiedererkannt werden kann. Auf die Begriffe Authentifizierung, Autorisierung und Identifizierung wird weiter unten näher eingegangen.

Das Identity und Access Management System bezieht sich vorzugsweise, aber nicht ausschließlich, auf den Umgang mit Kunden. In diesem Zusammenhang ist der Begriff "Customer Identity und Access Management (CIAM) gebräuchlich.

Das Identity und Access Management System kann aber auch auf andere Zusammenhänge, wie zum Beispiel Mitarbeiter, B2B-Partner, Alumni oder Bewerber, angewandt werden.

Aus Vereinfachungsgründen wird die Erfindung nachfolgend exemplarisch, im Zusammenhang mit Kunden, unter dem Begriff "Customer Identity und Access Management", näher erläutert.

Ebenso wird im Weiteren die Wortfolge "Customer Identity und Access Management" inhaltlich gleich verwendet mit der Wortfolge "Customer Identity und Access Management System".

Das Customer Identity und Access Management klärt im Sinn der Erfindung die Identität des Kunden (wer ist wer?). Sie klärt darüber hinaus, was der jeweilige Kunde tun darf (wer darf was?).

Das Customer Identity und Access Management bildet die Identität des Kunden in allen ihren Facetten sicher und zuverlässig ab. Mithilfe des Customer Identity und Access Managements kann die Identität des Kunden zuverlässig überprüft und geschützt werden.

Die Sicherstellung der Identität des Kunden steht dabei im Vordergrund. Zur Sicherstellung der Identität kann ein Passwort vergeben werden. Es kann darüber hinaus ein Zwei-Faktor-Authentifizierungssystem zur Anwendung gebracht werden. Weiterhin können biometrische Merkmale des Kunden mit unterschiedlichen technischen Verfahren abgefragt werden.

Nach Feststellung der Identität des Kunden (Identifizierung) und nach der Klärung der Frage, was der jeweilige Kunde tun darf (Authentifizierung) wird ein digitales Profil des Kunden erstellt und/oder ein bestehendes digitales Profil verfeinert.

Das digitale Profil eines Kunden kann Stammdaten umfassen. Diese sind vorzugsweise, aber nicht ausschließlich, die Adresse des Kunden, sein Geburtsdatum und die Kontaktdaten.

Die Stammdaten, die im digitalen Profil des Kunden festgeschrieben sind, können darüber hinaus Vorlieben und/oder Interessen und/oder Eigentumsverhältnisse des Kunden umfassen.

Das digitale Profil des Kunden kann zu einer Erhöhung der Sicherheit genutzt werden. Hat zum Beispiel ein Kunde seinen Sitz in Deutschland und meldet sich aus einem weit entfernten Land an, kann das System unter anderem zusätzliche Merkmale des Benutzers verlangen, um seine Identität nachzuweisen und Missbrauch vorzubeugen.

Zudem ermöglicht es das digitale Profil des Kunden, den Kunden näher kennen zu lernen. Die Bedürfnisse des jeweiligen Kunden können besser eingeschätzt werden.

Aufgrund des digitalen Profils können dem Kunden, noch bevor er einen entsprechenden Bedarf angemeldet hat, relevante Angebote zur richtigen Zeit und in den richtigen Umständen unterbreitet werden.

Die Erstellung eines digitalen Profils erfordert die Einwilligung des Kunden zur Erhebung und/oder zur weiteren Verarbeitung seiner Daten. Die Daten und/oder Informationen des digitalen Profils des Kunden können für das sogenannte E-Mail-Marketing und/oder zur Durchführung einer Customer-Data-Analyse genutzt werden.

Das Customer Identity und Access Management ermöglicht es dem Kunden, seine Identität gegenüber vorzugsweise einer Computersoftware und/oder einer Computerplattform mittels eines Passworts darzulegen.

Mithilfe des Passworts kann sich der Kunde vorzugsweise in einem Webshop einloggen. Er kann sich mithilfe seines Passworts in einem datengesicherten, personalisierten Bereich, vorzugsweise einer Plattform, eigenständig bewegen.

Mithilfe des Customer Identity und Access Managements kann sich der Kunde vorzugsweise, aber nicht ausschließlich, über einen "Single-Sign-On" einheitlich und komfortabel Zugang zu einem breit aufgestellten Angebotssystem verschaffen. Mit dem "Single-Sign-On"-Zugang verschafft sich der Nutzer über eine einmalige Identifizierung und/oder eine einmalige Authentifizierung Zugang auf alle Rechner und/oder Dienstleistungen z.B. an seinem Arbeitsplatz, für die er vorzugsweise lokal berechtigt ist (Autorisation).

Dank des "Single-Sign-On"-Systems kann der Nutzer von seinem Arbeitsplatz auf alle weiteren Rechner und/oder Dienstleistungen zugreifen, ohne sich jedes Mal erneut identifizieren und autorisieren lassen zu müssen.

Voraussetzung ist lediglich, dass der Nutzer für den Zugang auf die vorbestimmten Rechner und/oder vorbestimmten Dienstleistungen berechtigt, also autorisiert ist.

Eine jeweils erneute Identifizierung und Authentifizierung ist für den Zugang zu den vorbestimmten Rechnern und für die vorbestimmten Dienstleistungen nicht mehr erforderlich.

Das Identity und Access Management kann weiter eine konsequente Datenintegration mittels eines CRM-Systems umfassen.

Unter dem CRM-System versteht die Erfindung ein Customer-Relationship-Management.

Innerhalb des Customer-Relationship-Managements richtet ein Anbieter sein Unternehmen gezielt und konsequent auf den Kunden aus.

Im Rahmen eines Kundenbeziehungsmanagements oder im Rahmen der Kundenpflege gestaltet der Anbieter eines Produkts und/oder einer Dienstleistung systematisch seine Kundenbeziehungsprozesse.

Das Customer-Relationship-Management umfasst die Dokumentation und die Verwaltung seiner Beziehungen mit den Kunden. Mithilfe des Customer-Relationship-Managements können die Beziehungen zwischen dem Anbieter von Gütern- und/oder Dienstleistungen und den Kunden langfristig vertieft und ausgerichtet werden.

Das Customer-Relationship-Management ermöglicht dem Anbieter vorzugweise, aber nicht ausschließlich einen 360°-Blick auf seinen Kunden. Das Customer-Relationship-Management eröffnet dem Anbieter weitere Berührungspunkte mit seinem Kunden. Die Berührungspunkte können z.B. eine Website sein oder eine Smartphone-App.

Die Berührungspunkte zwischen dem Anbieter und dem Kunden können auch durch einen Serviceberater des Anbieters gewährleistet werden. Darüber hinaus können die Berührungspunkte mit dem Kunden über einen Händler vor Ort und/oder eine Telefon-Hotline aufgebaut werden.

Das Customer Identity und Access Management ermöglicht es, dem Anbieter, sein Angebotsportfolio zu straffen und/oder zu verbessern.

Angebote an den Kunden können gezielt und zeitnah zugestellt werden.

Daten und/oder Informationen zum Verhalten des Kunden können gesammelt und/oder strukturiert und/oder gespeichert werden.

Innerhalb des Customer Identity und Access Managements können Daten und/oder Informationen zur Ausbildung des Kunden-Profils aus unterschiedlichsten Quellen zusammengefasst und/oder ausgewertet werden.

Im Rahmen des Customer Identity und Access Managements kann sich der Anbieter von Gütern und/oder Dienstleistungen, vorzugsweise im Speicherwerk seines Computers, eine Plattform anlegen, auf die er und/oder auch der Kunde zugreifen kann.

Mithilfe der Plattform kann der Anbieter eine Schnittstelle zu Applikationen anderer Anbieter von Gütern und Dienstleistungen schaffen.

Die sogenannte Open API beschreibt ein Schema zur einheitlichen Spezifizierung und Beschreibung einer Programmschnittstelle, auch Application Programming Interface (API) genannt, sodass andere Systeme und Entwickler diese leicht verstehen, nutzen und integrieren können.

Das Customer Identity und Access Management deckt auf diese Weise unterschiedliche Funktionen ab. Es bildet einen zentralen Erfolgsfaktor vorzugsweise, aber nicht ausschließlich, für digitale Geschäftsprozesse.

Das Customer Identity und Access Management erfordert ein kurzes Zeitintervall zwischen der Erstellung des Produkts und/oder der Dienstleistung und der Einführung in den Markt.

Die Güter und/oder Dienstleistungen müssen vom Anbieter nationalen und internationalen Kunden in gleicher Weise und unter den gleichen Bedingungen angeboten werden können.

Die Produkte und/oder Dienstleistungen müssen dabei den Kunden auf nationaler wie auf internationaler Ebene verlässlich verfügbar sein.

Mergers und Acquisitions müssen flexibel unterstützt werden können. Geschäftsmodelle müssen neu entwickelt werden und ohne Zeitverlust eingesetzt werden können.

Die Kostenstruktur für das Angebot von Gütern und/oder Dienstleistungen müssen dem Kunden gegenüber transparent und kalkulierbar präsentiert werden.

Bekannte Customer Identity und Access Management Systeme werden im Rahmen eines Produktansatzes an die Bedürfnisse des Kunden angepasst.

Dieser Ansatz erweist sich jedoch vielfach als sehr zeitaufwendig und/oder kostenintensiv. Ein hoher Schulungs- und Wartungsaufwand führt in gleicher Weise zu hohen Kosten.

### Cloud-Services

Die Erfindung versteht unter "Cloud-Services" vorzugsweise eine "IT-Infrastruktur", die vorzugsweise über das Internet verfügbar gemacht wird. Innerhalb des "Cloud-Services" werden dem Nutzer zusätzlicher Speicherplatz und/oder ergänzende Rechenleistung zur Verfügung gestellt.

Innerhalb der "Cloud-Services" kann der Nutzer auch Anwendungssoftware als Dienstleistung erhalten.

Bekannte Cloud-Dienstleister bieten dem Nutzer vorzugsweise Identity-as-a-Service-Lösungen (IDaaS) an.

Bekannte Cloud-Dienstleistungen sind z.B. Auth0 oder OKTA, die ausschließlich online zur Verfügung stehen.

Die vorgenannten Cloud-Services sind standardisierte Lösungen. Die Lösungen bieten dem Nutzer aber nur in sehr geringem Maße Raum für individuelle Anpassungsmaßnahmen.

### Identity-as-a-Service

Die Erfindung versteht unter dem Begriff "Identity-as-a-Service" (IDaaS) vorzugsweise, aber nicht umfassend, eine Authentifizierungs-Infrastruktur. Die Authentifizierungs-Infrastruktur wird vorzugsweise von einem Serviceprovider eingerichtet, betrieben und verwaltet. Die "Identity-as-a-Service"-Dienstleistung ist vorzugsweise eine "Single-Sign-On"-Dienstleistung für "Cloud-Services".

"Identity-as-a-Service"-Dienstleistungen führen zu höherer Standardisierung.

### Unzulänglichkeiten von Verfahren zur Ausführung eines Identity und Access Managements aus dem Stand der Technik

Die Installation eines Softwareprogrammproduktes für ein Identity und Access Management System ist vielfach sehr zeitaufwendig und daher kostenintensiv. Das zugehörige Softwareprogrammprodukt umfasst eine Vielzahl von Komponenten, die installiert werden müssen. Die Installation, vorzugsweise im Rahmen eines Cluster-Betriebs, ist zeitlich sehr aufwendig, auch wenn sie einem stets gleichen Schema folgt.

Die Bereitstellung der Infrastruktur zur Implementierung von Verfahren zur Ausführung eines Identity und Access Management Systems in die vorgegebene Nutzerumgebung erweist sich oftmals als sehr zeitaufwendig, da viele Fachabteilungen des Nutzers involviert sind.

Soll eine ansatzweise vergleichbare Infrastruktur herkömmlich hergestellt werden, müssen zum Beispiel mindestens zwei Server mit zugehörigem Betriebssystem pro Region bereitgestellt werden. Andernfalls wäre die hergestellt Lösung nicht hochverfügbar, weil der Ausfall eines Servers direkt zum Ausfall des Systems führt. Es muss ein Netzwerk mit einer entsprechenden Firewall installiert werden. Darüber hinaus sind sogenannte Load-Balancer und/oder Zertifikate erforderlich.

Bei einer herkömmlichen Installation muss die spezifisch für das System notwendige Infrastruktur hergestellt werden, die besondere Anforderungen stellt an vorzugsweise, aber nicht ausschließlich, Firewalls, Netzwerkkonfiguration, Zertifikaten, Loadbalancern etc. Da in Unternehmen häufig verschiedene Abteilungen / Teams für diese Komponenten zuständig sind, sind die Prozesse häufig aufwendig und dauern lange.

Häufig wird bei herkömmlicher Installation nur ein äußerst geringer Automatisierungsgrad überhaupt hergestellt oder erreicht. Das hat dann konkret zur Folge, dass zum Beispiel bei einer Ausgliederung von Unternehmensteilen für den ausgegliederten Teil das komplette Vorhaben erneut durchgeführt werden muss.

Die Automatisierungen sind daher vergleichsweise teuer in der Implementierung und nicht auf andere Nutzer übertragbar.

Sogenannte Software-as-a-Service-Lösungen (SaaS-Lösungen) sind bei vielen Nutzern als mögliche Alternativen nicht einsetzbar. Mehrere Nutzer werden als sogenannte "Mandanten" auf einem einzigen System eingerichtet.

Individuelle Anforderungen des Nutzers (einzelner Mandant) können lediglich in geringem Umfang, oder gar nicht berücksichtigt werden. Der Nutzer (Mandant) hat keine Möglichkeit, insbesondere ein Softwareprogrammprodukt bei der Installation (Deployment) des Identity und Access Management Systems auf seine individuellen Anforderungen und Gegebenheiten anzupassen.

Auf die Strategie und/oder dem Projektplan (Roadmap) zur Installation des Identity und Access Management Systems hat der Nutzer keinen Einfluss.

Bekannte Identity und Access Management Systeme setzen den Nutzer vielfach in große Abhängigkeit vom jeweiligen System. Aus diesem Grund zögern die Nutzer vielfach vor der Implementierung bekannter Identity und Access Management Systeme.

Der Nutzer hat darüber hinaus keinen Einfluss auf den Zeitpunkt, zu dem Änderungen am Identity und Access Management System durchgeführt werden.

Die Installation eines Identity und Access Management Systems und/oder eines zugehörigen Softwareprogrammprodukts erweist sich als zeitlich sehr aufwändig.

Den Nutzern unterlaufen unabhängig voneinander systembedingt dieselben Fehler. Ein effektives Lernen aus den Fehlern über unabhängige Systeme und Softwareproduktprogramme hinweg, kann vielfach nicht erfolgen.

Bekannte Identity und Access Management Systeme und/oder zugehörige Softwareprogrammprodukte umfassen eine Vielzahl von Standardaufgaben, die - systembedingt - von jedem Nutzer installiert werden. Eine Anpassung des Identity und Access Management Systems und/oder des zugehörigen Softwareprogrammprodukts auf die spezifischen Bedürfnisse des Nutzers und/oder auf betriebliche Besonderheiten kann nicht, oder nur in geringem Umfang durchgeführt werden.

Bekannte Identity und Access Management Systeme sind nicht, oder nur bedingt für einen weltweiten Einsatz einsetzbar. Performance-Probleme und/oder rechtliche Gegebenheiten stehen einem weltweiten Einsatz der aus dem Stand der Technik bekannten Identity und Access Management Systeme entgegen.

### Aufgaben der Erfindung

Die Erfindung stellt sich daher die Aufgabe, ein Verfahren und ein zugehöriges System zur Ausführung eines Identity und Access Management Systems bereitzustellen, das die oben aufgelisteten Unzulänglichkeiten bekannter Systeme ausschließt.

### Lösung der Aufgaben

Die Aufgaben werden gelöst durch ein Verfahren zur Ausführung eines Identity und Access Management Systems nach den Merkmalen des Anspruchs 1.

Die Aufgaben werden darüber hinaus gelöst durch die Merkmale eines Systems zur Ausführung des Verfahrens nach dem Anspruch 25.

Das Verfahren zur Ausführung eines Identity und Access Management Systems sieht einen Master-Computer vor, der mit wenigstens einem Slave-Computer kommuniziert.

Der Master-Computer umfasst bei dem Verfahren wenigstens eine Komponente. Die Komponente ist dabei jeweils als ein Rechenwerk und/oder als ein Speicherwerk ausgebildet.

Die Komponente ist weiter als wenigstens eine Arbeitskomponente ausgebildet.

Nach dem Verfahren wird jeweils eine Einheit einer Funktionalität des Rechenwerks und/oder des Speicherwerks erzeugt. Es wird darüber hinaus jeweils eine Einheit der Funktionalität der weiteren Arbeitskomponente des Master-Computers erzeugt.

Die jeweiligen Einheiten der Funktionalität des Rechenwerks und/oder des Speicherwerks und/oder die Funktionalität der weiteren Arbeitskomponente werden in wenigstens einen Code übersetzt.

Die Einheiten der jeweiligen Funktionalitäten werden in codierter Form vom Master-Computer zum Slave-Computer übertragen.

Der Master-Computer wird mithilfe des Rechenwerks gesteuert.

Zur Steuerung des Master-Computers arbeitet wenigstens ein Softwareprogrammprodukt .

Jeweils eine Einheit der Funktionalität des Softwareprogrammprodukts wird in wenigstens einen Code übersetzt.

Die jeweilige Einheit der Funktionalität des Softwareprogrammprodukts wird in codierter Form vom Master-Computer zum Slave-Computer übertragen.

Das Rechenwerk und/oder das Speicherwerk und/oder die weitere Arbeitskomponente und/oder das Softwareprogrammprodukt des Master-Computers werden in Abhängigkeit wenigstens eines Parameters des wenigstens einen Slave-Computers konfiguriert.

Die jeweilige Konfigurierung wird in einen Code übersetzt.

Die Konfigurierung wird dadurch in codierter Form vom Master-Computer zu dem Slave-Computer übertragen.

In einem Speicherwerk des Slave-Computers werden Daten und/oder Informationen eines Nutzers abgespeichert.

Aus den Daten und/oder aus den Informationen des Nutzers wird in dem Rechenwerk des Slave-Computers ein persönliches Profil des Nutzers zu dessen Identifizierung und/oder zur Authentifizierung des Nutzers und/oder zur Autorisierung des Nutzers erstellt.

Die in den Code übersetzten Einheiten der Funktionalität des Rechenwerks und/oder des Speicherwerks werden in das Rechenwerk und/oder das Speicherwerk und/oder in die weitere Arbeitskomponente sowie in wenigstens eine Laufzeitumgebung (Kubernetes) des Slave-Computers übertragen.

Die in einen Code übersetzten Einheiten der jeweiligen Funktionalitäten der weiteren Arbeitskomponente und die in den Code übersetzten Einheiten des Softwareprogrammprodukts und/oder die Konfiguration des Master-Computers werden in das Rechenwerk und/oder in das Speicherwerk und/oder in die weitere Arbeitskomponente sowie in wenigstens eine Laufzeitumgebung (Kubernetes) des Slave-Computers übertragen.

Die Daten und/oder Informationen des Nutzers werden im Rechenwerk und/oder im Speicherwerk und/oder in der weiteren Arbeitskomponente des Slave-Computers be- und/oder verarbeitet. Die Bearbeitung und/oder die Verarbeitung erfolgt dort mithilfe der übertragenen Funktionalitäten des Softwareprogrammprodukts auf den Slave-Computer.

Die vom Master-Computer zum Slave-Computer übertragenen, in einen Code übersetzten Einheiten der jeweiligen Funktionalitäten wirken auf das Rechenwerk und/oder auf das Speicherwerk und/oder auf die weitere Arbeitskomponente und/oder auf das Softwareprogrammprodukt des Slave-Computers ein.

Auf die wenigstens eine Schicht des Verfahrens wird weiter unten im Detail eingegangen.

### Hintergrund der Erfindung

### Infrastructure as Code

Wird ein Softwareprogrammprodukt, vorzugsweise im Rahmen eines Identity und Access Management Systems in ein bereits vorhandenes Rechenzentrum und/oder einen Computer installiert, ist dies meist ein sehr langwieriger und kostenintensiver Vorgang.

Mit dem Ansatz "Infrastructure as Code" werden die Anforderungen des Nutzers bezüglich der erforderlichen Hardware und/oder der erforderlichen Software in einen Code programmiert.

Der Code kann dabei ein Plattform-Code sein.

Mithilfe der "Infrastructure as Code" werden vorgegebene Hardware-Infrastrukturen und/oder Software-Infrastrukturen mit "Cloud-Infrastrukturen" bereitgestellt.

Unter "Cloud-Infrastrukturen" versteht die Erfindung vorzugsweise, aber nicht ausschließlich Systeme wie "Amazon", "AWS", "Microsoft Azure" oder "Google Cloud Plattform".

Es versteht sich von selbst, dass die vorausgegangene Aufzählung nur beispielhaft gemeint ist.

### Configuration as Code

Unter "Configuration as Code" versteht die Erfindung die Trennung der Konfiguration auf den spezifischen Bedarf und/oder die spezifische Anforderung eines Nutzers von einem Produkt. Unter dem Begriff Produkt versteht die Erfindung vorzugsweise, aber nicht ausschließlich, ein Softwareprogrammprodukt.

Je nach Bedarf und Anforderung des Nutzers wird die nutzerspezifische Konfiguration des Produkts vom Produkt als solchen, getrennt. Das Produkt ist dabei, vorzugsweise, aber nicht ausschließlich, ein Softwareprogrammprodukt.

Die Konfiguration wird losgelöst vom Produkt als Code abgelegt und erlaubt, dynamisch auf die Laufzeitumgebung zu reagieren. Ist die Laufzeitumgebung zum Beispiel unter einem bestimmten Uniform Resource Locator (URL) erreichbar (zum Beispiel kundenciam.de), kann diese URL automatisiert konfiguriert werden, sodass das System dort ansprechbar ist. Die URL ist also nicht statisch konfiguriert, sondern wird erst zur Laufzeit dynamisch konfiguriert. Der Vorteil besteht unter anderem darin, dass ein Anwender typischerweise mehrere Umgebungen betreiben möchte für Entwicklung, Test und produktiven Einsatz. Es müssen also nicht drei Konfigurationen gepflegt werden, sondern das System kann dreimal ausrollen und es wird dynamisch erreichbar sein unter entwicklungssystem.kundenciam.de, testsystem.kundenciam.de und produktivsystem.kundenciam.de (alle URLs nur als Beispiel zur Verdeutlichung).

Es gibt viele weitere Beispiele, in denen dieser Ansatz deutlich überlegen ist, unter anderem bei der Reaktion auf die verfügbaren Ressourcen. Das System ist in der Lage sich dynamisch anzupassen, je nachdem wie viele Nutzer gerade das System nutzen oder zum Beispiel welche Hardware-Ausprägungen in der Laufzeitumgebung vorhanden sind.

In einer Verwaltung von unterschiedlichen Versionen sind eindeutig codierte Konfigurationen festgelegt. Die unterschiedlichen Codes können miteinander verglichen werden.

Mithilfe der Codierung wird eine erhebliche Qualitätssteigerung erreicht, da jede Änderung an der Codierung nachvollzogen werden kann und manuelle, fehleranfällige Konfigurationsänderungen unterbleiben. Jedes Code-Artefakt kann jederzeit und/oder bei jedem Nutzer und/oder bei jedem Identity und Access Management System wieder verwendet werden.

Auf die Begriffe "Infrastructure-as-Code" und "Configuration-as-Code" wird weiter unten noch gesondert eingegangen.

Die Erfindung sieht vor, dass die Installation des Identity und Access Management Systems und/oder die Installation des zugehörigen Softwareprogrammprodukts vollständig automatisiert erfolgt.

Dem Anwender wird zur Installation des Identity und Access Management Systems und/oder des zugehörigen Softwareprogrammprodukts die benötigte Infrastruktur in einer Cloud bereitgestellt. Die Konfiguration des Identity und Access Management Systems sowie des zugehörigen Softwareprogrammprodukts erfolgt mithilfe der Übertragung eines Codes vom Master-Computer auf den Slave-Computer.

Die vorab dargestellte Cloud-Umgebung kann entweder vom Anwender selbst oder von einem Externen bereitgestellt werden. Ersteres erlaubt weitere Vorteile bezüglich Sicherheit und Governance. Da der Anwender direkt Vertragspartner des Cloudanbieters ist, hat er alle direkten Zugriffsmöglichkeiten selbst und kann auch zum Beispiel Auditrechte geltend machen. Dies stellt einen deutlichen Gewinn gegenüber einem komplexen Vertragskonstrukt über Subunternehmen dar.

Noch eingängiger wird dieser Vorteil durch die Möglichkeit, dass Anwender ihr eigenes Rechenzentrum mit derselben Laufzeitumgebung (Kubernetes) ausstatten können. Dann ist noch nicht einmal der Bezug eines Cloud-Dienstes notwendig und die Daten bleiben vollständig unter der Kontrolle des Anwenders.

Alle für den Produktionsbetrieb benötigten Artefakte des Identity und Access Management Systems und des zugehörigen Softwareprogrammprodukts werden dem Nutzer in codierter Form übertragen.

Automatische Backups und/oder Monitoringfunktionen werden dem Nutzer in Form von Codierungen auf seinen Slave-Computer übertragen.

### Implementierung von Identity und Access Management Systemen mit Kubernetes

Unter dem Begriff "Kubernetes" versteht die Erfindung eine "Laufzeitumgebung" oder eine "Ausführungsumgebung".

Im Weiteren wird der Begriff Laufzeitumgebung verwendet. Die Laufzeitumgebung ist ein Softwareprogramm, mit dem vorzugsweise Softwareprogrammprodukte im Rahmen des Identity und Access Management Systems, vorzugsweise in ungewohnter Umgebung, lauffähig gemacht werden können.

Die Laufzeitumgebung verbindet vorzugsweise Anwendersoftwareprogramme mit dem im jeweiligen Computer vorinstallierten Betriebssystem. Zentraler Aspekt bei Kubernetes ist, dass es für die Ausführung von Anwendungsprogrammen in hochverfügbaren Umgebungen ausgelegt ist. Es stellt also eine Laufzeitumgebung für verteilte, redundante Systeme über mehrere Computer hinweg dar.

Vorzugsweise kann das Identity und Access Management System als microservice-basierte Architektur ausgebildet sein.

Das Identity und Access Management System und/oder das Softwareprogrammprodukt kann in einzelne Micro-Services unterteilt werden.

Das Identity und Access Management System und/oder das Softwareprogrammprodukt kann unabhängig von weiteren Komponenten des Identity und Access Management Systems oder des Softwareprogrammprodukts ergänzt und/oder erweitert werden.

Konfigurationen können in codierter Form vom Master-Computer zu einem beliebigen Slave-Computer übertragen werden.

Die "Time-to-Market" wird erfindungsgemäß auf ein Minimum der ursprünglich benötigten Zeit reduziert.

Mit der Übertragung von codierten Einheiten der jeweiligen Funktionalität vom Master-Computer auf den Slave-Computer gelingt ein sogenannter "internationaler Rollout", ohne marktspezifische Anforderungen und/oder regulatorische und gesetzliche Vorgaben an lokal voneinander abweichende Parameter anpassen zu müssen.

Geografische und/oder gesetzliche Anpassungen können mithilfe von wenigstens einer Codierung eingerichtet und vom Master-Computer auf den Slave-Computer übertragen werden.

Hierzu ist es ausreichend, ein Duplikat einer Produktionsumgebung in ein Speicherwerk eines Master-Computers aufzuspielen.

Das Speicherwerk des Master-Computers kann ein Rechenzentrum oder eine lokale Cloud sein.

Auf diese Weise können die Installationszeiten und die Set-up-Zeiten minimiert werden.

Die Master-Computer können an lokal voneinander abweichenden Orten jeweils Host-Standorte aufweisen.

Host-Standorte können beispielhaft und in keiner Weise ausschließlich, in jedem Land und/oder auf jedem Kontinent der Welt angeordnet sein.

Dies erweist sich als vorteilhaft, da sich der Nutzer nicht länger mit lokalen und/oder nationalen und/oder regionalen Hosting-Fragen auseinandersetzen muss.

Das erfindungsgemäße "Hosting" gewährleistet kurze Server-Latenzen bei gleichzeitiger Verfügbarkeit von Support und Service über 24 Stunden an 7 Tagen in der Woche.

Identity und Access Management Systeme und/oder zugehörige Softwareprogrammprodukte können in unterschiedliche Versionen, je nach Bedarf und/oder nach Anforderung des Nutzers unterteilt werden. Unbeachtlich jedweder markt- und/oder nutzerspezifischer Anpassungen bleibt das Identity und Access Management System und/oder das zugehörige Softwareprogrammprodukt in der Basisversion dasselbe.

Auf diese Weise kann der Entwicklungsaufwand über sämtliche Versionen reduziert werden. Gleichfalls kann die Prozesssicherheit über alle Versionen gesteigert werden.

Die Grundlage für jede neue Version ist eine bereits erprobte und getestete Version des Identity und Access Management Systems und/oder des zugehörigen Softprogrammprodukts.

Identity und Access Management Systeme und/oder zugehörige Softwareprogrammprodukte können, sobald sie von Nutzern geprüft und abgenommen werden, als sogenannte geklonte Systeme und Softwareprogrammprodukte weiterverwendet werden.

Die Konsistenz der Nutzerdaten und/oder -informationen werden mit dem erfindungsgemäßen Verfahren gesichert.

Anstatt Nutzerdaten-Managementprozesse des Nutzers direkt in den Slave-Computer des Nutzers zu integrieren, werden die Daten und/oder Informationen in ein dupliziertes System im Master-Computer eingespielt.

Die getesteten und fehlerfreien Daten und/oder Informationen werden vorzugsweise in codierter Form vom Master-Computer auf den Slave-Computer des Nutzers übertragen.

Auf diese Weise können die Systeme des Master-Computers identisch sein, mit dem System des Slave-Computers.

Da auf diese Weise die Systeme des Master-Computers identisch sind mit dem System des Slave-Computers, ist die Migration von Daten und/oder Informationen von dem Master-Computer auf den Slave-Computer ohne großen Aufwand durchführbar.

Ein geplantes Produktionssystem des Nutzers lässt sich inklusive aller dazu erforderlicher Prozesse über den Master-Computer ausführlich testen.

Wertvolle Nutzungsdaten des Nutzers verbleiben im Slave-Computer und können somit nicht beschädigt werden.

Nach erfolgreichem Test des Identity und Access Management Systems im Slave-Computer sowie nach erfolgreichem Test des Softwareprogrammprodukts im Rahmen des Master-Computers, können die getesteten, und für gut befundenen Systeme und Softwareprogrammprodukte vom Master-Computer auf den Slave-Computer übertragen werden.

### Master-Computer und Slave-Computer

Die Beziehung zwischen dem Master-Computer und dem Slave-Computer beschreibt eine hierarchische Verwaltung des Zugriffs auf gemeinsame Ressourcen, Daten oder Informationen.

Die Ressourcen umfassen die Einheiten der Funktionalitäten der jeweiligen Komponenten des Master-Computers. Der Master-Computer umfasst dabei als Komponenten wenigstens jeweils ein Rechenwerk und/oder wenigstens ein Speicherwerk. Eine zusätzliche Komponente des Master-Computers ist die weitere Arbeitskomponente.

Die weitere Arbeitskomponente kann jede Hardware-Einheit des Master-Computers sein, die zur Ausführung eines Computerprogrammprodukts erforderlich ist.

Der Master-Computer kommuniziert mit wenigstens einem Slave-Computer.

Der Master-Computer ist dazu ausgebildet, Funktionseinheiten seines Rechenwerks und/oder Funktionseinheiten seines Speicherwerks und/oder Funktionseinheiten einer weiteren Arbeitskomponente zu erzeugen.

Zur Übertragung der Einheit der jeweiligen Funktionalität vom Master-Computer zum Slave-Computer, wird die jeweilige Einheit der Funktionalität des Rechenwerks und/oder des Speicherwerks und/oder der Funktionalität der weiteren Arbeitskomponenten in einen Code übersetzt.

Je nach Bedarf und/oder Anforderung des Nutzers werden die Einheiten der jeweiligen Funktionalität in codierter Form vom Master-Computer auf den Slave-Computer übertragen.

Der Master-Computer umfasst darüber hinaus ein Softwareprogrammprodukt. Das Softwareprogrammprodukt des Master-Computers steuert den Master-Computer.

Der Master-Computer erzeugt vorzugsweise mithilfe seines Rechenwerks Einheiten der Funktionalität des Softwareprogrammprodukts.

Die jeweilige Einheit der Funktionalität des Softwareprogrammprodukts des Master-Computers wird in einen Code übersetzt.

In dem Umfang und/oder in der Ausprägung, in der der Slave-Computer die jeweiligen Einheiten der Funktionalität des Master-Computers benötigt, werden die Einheiten der Funktionalität in codierter Form vom Master-Computer zum Slave-Computer übertragen.

Der Master-Computer umfasst ein Speicherwerk. Das Speicherwerk ist als Datenspeicher oder als Speichermedium ausgebildet und dient der Speicherung von Daten und/oder Informationen.

Das Speicherwerk des Master-Computers kann ein elektronisches Bauteil sein. Es kann auch ein Datenträger oder ein Speichermedium sein. Das Speicherwerk kann eine Cloud sein, bei der Daten und/oder Informationen über das Internet gespeichert werden.

Die Erfindung versteht unter dem Begriff "Rechenwerk" vorzugsweise ein elektronisches Schaltwerk zur Ausführung von Befehlen eines Softwareprogrammprodukts. Das Rechenwerk des Computers weist Bausteine auf zur Programmierung, mit denen jede beliebige Verarbeitungslogik für Daten abgebildet werden kann.

Beispielhaft und in keiner Weise ausschließlich ist das Rechenwerk des Master-Computers eine arithmetisch-logische Einheit (ALU).

### Code

Ein Code ist eine Vorschrift, bei der jedem Zeichen eines ersten Zeichenvorrats eindeutig ein Zeichen und/oder eine Zeichenfolge aus einem anderen Zeichenvorrat zugeordnet wird.

Bei der vorliegenden Erfindung dient der Code zum Austausch von Daten und/oder Informationen zwischen dem Master-Computer und dem Slave-Computer.

Vorzugsweise dient der Code der Übertragung von Einheiten der Funktionalität des Rechenwerks und/oder des Speicherwerks und/oder der weiteren Arbeitskomponente des Master-Computers zum Slave-Computer.

Der Code dient der Übertragung der Einheit einer Funktionalität des Softwareprogrammprodukts vom Master-Computer zum Slave-Computer.

Zur Übertragung der jeweiligen Einheiten vom Master-Computer zum Slave-Computer wird die jeweilige Einheit der Funktionalität in wenigstens einen Code übersetzt. Die jeweilige Einheit der Funktionalität wird auf diese Weise in codierter Form vom Master-Computer zum Slave-Computer übertragen.

Zur Übertragung des Codes umfassen der Master-Computer und/oder der Slave-Computer wenigstens eine informationsformulierende Instanz (Aufzeichner/Sender).

Der Master-Computer und/oder der Slave-Computer umfassen zusätzlich wenigstens eine informationsempfangende Instanz. Die informationsempfangende Instanz ist als Leseeinrichtung oder als Empfänger ausgebildet.

Zwischen dem Master-Computer und/oder dem Slave-Computer wird die codierte Einheit der jeweiligen Funktionalität als Information in codierter Form übertragen.

Die Übertragung von Einheiten der jeweiligen Funktionalität erfolgt vom Master-Computer zum Slave-Computer.

Die Übertragung von Daten und/oder Informationen, vorzugsweise in Form von Einheiten einer jeweiligen Funktionalität können auch vom Slave-Computer zum Master-Computer übertragen werden.

Wenigstens zwei Codes können in wenigstens einer Code-Speichereinrichtung (Code-Repository) gespeichert werden.

Unter der Code-Speichereinrichtung versteht die Erfindung eine Einrichtung des Rechenwerks und/oder des Speicherwerks des Master-Computers, in der jede Version des Identity und Access Management Systems und/oder jede Version des Softwareprogrammprodukts verwaltet wird.

In der Code-Speichereinrichtung werden alle Versionen der Einheiten der Funktionalität vorzugsweise des Rechenwerks und/oder des Speicherwerks und/oder der weiteren Arbeitskomponente in den jeweiligen Code übersetzt, gebündelt und gespeichert.

Alle Codes der jeweiligen Einheiten der Funktionalität werden in der Code-Speichereinrichtung verwaltet und strukturiert.

Mithilfe vorgegebener Regeln wird der Code vom Master-Computer kontinuierlich bereitgestellt. Mithilfe der Regeln wird der Code kontinuierlich in den Slave-Computer integriert.

Bei der Übertragung des wenigstens einen Codes von dem Master-Computer zum Slave-Computer, wird der Code mithilfe einer vorgegebenen Automatisierungsinfrastruktur (CI/CD) in den Slave-Computer bereitgestellt und/oder integriert.

Der Code, der vom Master-Computer zum Slave-Computer übertragen wird, ist vorzugsweise eine Textdatei und folgt insbesondere einer vorgegebenen Semantik.

Die Automatisierungsinfrastruktur wendet bei der Übertragung vom Master-Computer auf den Slave-Computer basierend auf vorliegenden Laufzeitbedingungen dynamische Änderungen an. Welche dies sind wird durch die "Configuration-as-Code" spezifiziert. Der "Configuration-as-Code" kann beispielhaft, aber nicht ausschließlich, mit Hilfe der Go-Templating-Language vorgenommen werden. Diese ist eine Sprache zur semantischen Beschreibung von logischen Abhängigkeiten zur Modifizierung beliebiger Ausgaben. Sie ist in der Programmiersprache Go implementiert.

### Einheit der Funktionalität

Die Einheit der jeweiligen Funktionalität und/oder die Einheit der Konfigurierung werden vor oder während oder nach der Übertragung vom Master-Computer zum Slave-Computer adaptiert und/oder angepasst.

Die Übertragung der jeweiligen Einheit der Funktionalität und/oder Konfigurierung erfolgt einzeln oder in sogenannten Paketen.

Die Einheit der jeweiligen Funktionalität und/oder der Konfigurierung wird vor oder während oder nach der Übertragung vom Master-Computer zum Slave-Computer skaliert.

Unter dem Begriff "Skalierung" versteht die Erfindung eine Unterteilung und/oder eine Bewertung der Einheiten der Funktionalitäten oder der Konfigurierung nach einer bestimmten Rangordnung, vorzugsweise nach physikalischen Größen.

Die Einheiten der Funktionalitäten und/oder der Konfigurierung können vor oder während oder nach der Übertragung nach vorbestimmten Zahlenwerten und/oder nach Maßeinheiten skaliert werden. Die vorangegangene Aufzählung ist nur beispielhaft und in keiner Weise abschließend gemeint.

Durch die Übertragung der in wenigstens einen Code übersetzten Einheit der Funktionalität oder der Konfigurierung, werden vorzugsweise die Kapazität des Rechenwerks und/oder die Kapazität des Speicherwerks und/oder die Kapazität der weiteren Arbeitskomponente erweitert und/oder verändert.

Durch die Übertragung der in wenigstens einen Code übersetzten Einheit der Funktionalität und/oder der Konfigurierung des Softwareprogrammprodukts, werden die Kapazität und/oder Bereiche und/oder Schritte des Softwareprogrammprodukts erweitert und/oder verändert. Auch hier ist die Aufzählung nur beispielhaft und in keiner Weise abschließend gemeint.

Die vom Master-Computer zum Slave-Computer übertragenen Einheiten der Funktionalitäten und/oder der Konfigurierung sind jeweils als eine Service-Leistung ausgebildet. Die Service-Leistung erbringt der Master-Computer für den Slave-Computer.

Die Service-Leistung wird dabei durch den Master-Computer jeweils an dem Rechenwerk und/oder an dem Speicherwerk und/oder an der weiteren Arbeitskomponente des Slave-Computers vorgenommen.

Die Übertragung von wenigstens einer Einheit der Funktionalität und/oder der Konfigurierung des Softwareprogrammprodukts des Master-Computers zum Slave-Computer, wird als Service-Leistung durchgeführt. Die Service-Leistung erfolgt dabei vom Master-Computer zum Slave-Computer.

Die Übertragung der in den Code übersetzten Einheit der Funktionalität und/oder der Konfigurierung vom Master-Computer zum Slave-Computer, erfolgt vorzugsweise automatisch.

Es versteht sich von selbst, dass die Übertragung auch manuell oder nach vorgegebenen Regeln erfolgen kann.

Das Softwareprogrammprodukt ist als Systemsoftware ausgebildet. Das Softwareprogrammprodukt kann eine Unterstützungssoftware sein. Es kann auch eine Anwendungssoftware sein. Die vorgenommene Aufzählung ist nur beispielhaft zu sehen und in keiner Weise abschließend gemeint.

### Laufzeitumgebung (Kubernetes)

Der Begriff "Laufzeitumgebung" beschreibt im Sinn der Erfindung die verfügbaren und festgelegten Voraussetzungen eines Laufzeitsystems vorzugsweise im Slave-Computer, die zum Betrieb vorzugsweise des Softwareprogrammprodukts erforderlich sind.

Die Laufzeitumgebung (Kubernetes) wird durch elementare Bestandteile einer Programmiersprache definiert. Die elementaren Bestandteile der Programmiersprache sind vorzugsweise, aber nicht umfassend, das Verhalten von Sprachkonstrukten und/oder Funktionen wie Typprüfung, Debugging oder eine Codegenerierung oder eine Codeoptimierung.

Die Laufzeitumgebung umfasst wenigstens eine Laufzeitbibliothek und/ oder eine Standardbibliothek und/oder Programmierschnittstellen.

Die Laufzeitumgebung umfasst Laufzeitvariablen. Es können Hard- und Software-Komponenten über Betriebssystemfunktionen vorgesehen sein.

Die Laufzeitumgebung umfasst wenigstens eine Funktion, mit der vorzugsweise ein Monitoring und/oder eine Ablaufprüfung ausgeführt werden kann.

Die Laufzeitumgebung umfasst wenigstens eine Funktion, mit der ein Debugging-Prozess und/oder eine Code-Generierung und/oder eine CodeOptimierung durchgeführt werden kann.

Mit der Laufzeitumgebung können Schnittstellen eingerichtet und betrieben werden.

Durch das in die Laufzeitumgebung eingebrachte Softwaresystem kann auch ein "Single-Sign-on-Prozess" ausgeführt werden.

Die Übertragung der Einheiten der Funktionalitäten und/oder der Konfigurierung vom Master-Computer zum Slave-Computer, kann auf wenigstens zwei Laufzeitumgebungen zeitgleich und/oder automatisch erfolgen.

Laufzeitumgebungen werden parallel oder seriell zueinander angeordnet.

Laufzeitumgebungen werden an lokal voneinander abweichenden Orten angeordnet.

Laufzeitumgebungen werden an lokal voneinander abweichende Parameter angepasst.

Die Laufzeitumgebung erlaubt es, Container auszuführen. Das erfindungsgegenständliche Identity und Access Management System folgt dem Microservice Architektur-Konzept und die Laufzeitumgebung ist darauf ausgelegt, Systeme, die diesem Konzept folgen, besonders gut ausführen zu können. Ein Micro-Service ist eine möglichst kleine Komponente in einem verteilten System.

Wenigstens zwei Laufzeitumgebungen werden in Clustern von Laufzeitumgebungen (Kubernetes-Cluster) konfiguriert.

### Schichten

Die jeweilige Schicht der Schichten-Architektur wird als "Service Layer" bezeichnet. Im Weiteren wird jedoch vereinfachend von einer "Schicht" gesprochen.

Die Komponenten und/oder die Code-Speichereinrichtung des Master-Computers und/oder des Slave-Computers werden in mindestens zwei voneinander abweichenden Schichten strukturiert.

Die Einheiten der Funktionalitäten und/oder der Konfigurationen und/oder die zugehörigen Codes und/oder die vorgegebenen Regeln zur Bereitstellung oder zur Integrierung der Codes, werden jeweils in mindestens zwei voneinander abweichenden Schichten strukturiert.

Die in Codes übersetzten Einheiten des Softwareprogrammprodukts und/ oder die wenigstens zwei Parameter zur Konfigurierung, werden in jeweils mindestens zwei voneinander abweichende Schichten strukturiert.

Ebenso können wenigstens zwei Laufzeitumgebungen jeweils in mindestens zwei voneinander abweichende Schichten strukturiert werden.

Die mindestens eine Einheit der Funktionalität des Softwareprogrammprodukts und/oder die Konfigurierung werden nach einer internen Abhängigkeit und/oder nach einer externen Abhängigkeit in wenigstens zwei Schichten strukturiert.

Die Strukturierung der Einheit der Funktionalität des Softwareprogrammprodukts und/oder die Konfigurierung können nach einer externen Abhängigkeit und/oder nach einer Integrationslogik und/oder nach einer Basiskonfiguration getrennt in wenigstens zwei Schichten strukturiert werden.

Die mindestens eine Einheit der Funktionalität des Rechenwerks und/oder die mindestens eine Einheit der Funktionalität des Speicherwerks und/oder die mindestens eine Einheit der Funktionalität der Arbeitskomponente und/oder die mindestens eine Einheit der Funktionalität des Softwareprogrammprodukts, können wenigstens nach einer internen Referenz in wenigstens zwei Schichten strukturiert werden. Die Strukturierung in wenigstens zwei Schichten kann auch nach einer vorgegebenen Nutzerkonfiguration und/oder nach einer Deployment-Abstraktion (derjenige Teil der Konfiguration muss abstrahiert werden, der sich auf eine Umgebung bezieht) getrennt in Schichten strukturiert werden.

Die mindestens eine Einheit der Funktionalität des Rechenwerks und/oder die mindestens eine Einheit der Funktionalität des Speicherwerks und/oder die mindestens eine Einheit der Funktionalität der Arbeitskomponente können, in Abhängigkeit wenigstens einer Infrastruktur-Konfiguration und/oder in Abhängigkeit wenigstens einer Cluster-Service-Konfiguration und/oder in Abhängigkeit einer Nutzer-Service-Konfiguration in wenigstens zwei Schichten strukturiert werden.

Die mindestens eine Einheit der Funktionalität des Softwareprogrammprodukts kann in Abhängigkeit wenigstens einer Infrastruktur-Konfiguration und/oder in Abhängigkeit wenigstens einer Cluster-Service-Konfiguration und/oder in Abhängigkeit wenigstens einer Nutzer-Service-Konfiguration in wenigstens zwei Schichten strukturiert werden.

Die Strukturierung ermöglicht eine Schichten-Architektur nach voneinander abweichenden Hierarchieebenen.

Die jeweiligen Schichten können durch Vergabe von Referenzen miteinander verbunden und/oder jeweils ineinander integriert werden. Eine Schicht kann, sofern erforderlich, eine andere Schicht überschreiben.

Jede Schicht kann vorzugsweise wenigstens zwei sogenannte "Unterschichten" umfassen.

### Schichten-Architektur

Zur Verdeutlichung wird die Schichten-Architektur am Beispiel dreier angenommener Schichten näher erläutert. Rein beispielhaft und in keiner Weise ausschließlich, wird eine **erste Schicht** angenommen (bezeichnet: Komponente), die sich auf das Softwareprogrammprodukt des Master-Computers bezieht.

Eine **zweite Schicht** (bezeichnet: Nutzer-Service) umfasst die Konfiguration der Hardware-Komponenten des Slave-Computers und/oder die Konfiguration des Softwareprogrammprodukts nach den Anforderungen und Besonderheiten des Nutzers.

Die **dritte Schicht** (bezeichnet: Nutzer-Stage) betrifft vorzugsweise die Einheiten der Funktionalität der Hardware-Komponenten, die vom Master-Computer als jeweilige Einheiten der Funktionalität in codierter Form zum Slave-Computer übertragen werden.

Die Schichten der Schichten-Architektur bilden die Grundlage für die Strukturierung der jeweiligen Codes. Mithilfe der Schichten-Architektur können die Code-Speichereinrichtungen (Code-Repository) und die Artefakte (Dateien, die von der Automatisierungsinfrastruktur zur Weiterverarbeitung genutzt werden. Sie sind zum Beispiel vorkompilierter Softwarecode, Container und andere Dateien) strukturiert werden.

Die jeweiligen Schichten bilden die Automatisierungsinfrastruktur innerhalb des Verfahrens zur Ausführung des Identity und Access Management Systems, sowie des zugehörigen Softwareprogrammprodukts.

Die Schichten der Schichten-Architektur dienen der Realisation und/ oder der Sicherstellung einer kontinuierlichen Installation und einer kontinuierlichen Integration der Einheiten der Funktionalität und/oder der Konfiguration, die vom Master-Computer zum Slave-Computer kommuniziert und übertragen werden.

Mithilfe der Schichten-Architektur können vorzugsweise spezifische Nutzerumgebungen vom Master-Computer zum Slave-Computer in codierter Form übertragen und installiert werden.

Mithilfe der Automatisierungsinfrastruktur können die Daten und/oder Informationen, die in der jeweiligen Schichten-Architektur festgelegt sind, über wenigstens zwei Nutzer hinweg benutzt werden.

Mithilfe der Automatisierungsinfrastruktur können unterschiedliche Versionen von Identity und Access Management Systemen und/ oder von den zugehörigen Softwareprogrammprodukten entwickelt und/oder vollständig beim Slave-Computer installiert werden.

Konkrete Änderungen am Identity und Access Management System sowie am zugehörigen Softwareprogrammprodukt können für den jeweiligen Nutzer im Master-Computer entwickelt und getestet werden.

Die getesteten Änderungen werden vom Master-Computer in codierter Form zum Slave-Computer übertragen und dort implementiert und auf die jeweiligen Anforderungen und Bedürfnisse des Nutzers konfiguriert.

Mithilfe der Schichten der Schichten-Architektur kann im Master-Computer eine Schichten-Architektur des Slave-Computers nachgebildet werden.

Die im Master-Computer nachgebildete Schichten-Architektur des Slave-Computers ermöglicht die Installation und/oder den Test sämtlicher Besonderheiten und/oder Anforderungen, die für den Slave-Computer des Nutzers erforderlich sind. Die Nachbildung des Slave-Computers des Nutzers im Master-Computer umfasst die vollständige Umgebung des Slave-Computers mit sämtlichen, erforderlichen Umsystemen, die der Kontrolle der Schichten der Schichten-Architektur unterliegen.

Die Daten oder Informationen der Hardware-Komponenten des Master-Computers und des zugehörigen Softwareprogrammprodukts werden innerhalb des Master-Computers auf die Anforderungen und Erfordernisse des Nutzers konfiguriert.

Die jeweils auf den Nutzer konfigurierten Einheiten der Funktionalitäten werden sodann vom Master-Computer auf den Slave-Computer kommuniziert und übertragen.

Die Konfigurationsdateien, die die Daten und/oder Informationen der Konfiguration des Nutzers umfassen, werden in Codes transferiert und in Form der Codes über alle Schichten hinweg mithilfe beispielsweise, aber nicht abschließend, einer Go-Templating-Language vom Master-Computer zum Slave-Computer übertragen.

Die vom Master-Computer zum Slave-Computer zu übertragenden Konfigurationsdateien können wenigstens eine Logik umfassen und/oder abbilden. Auf diese Weise kann flexibel und dynamisch auf Abhängigkeiten oder Parameter des Nutzers mithilfe der Konfiguration reagiert werden.

### Erste Schicht (bezeichnet: Komponente)

Im Zusammenhang mit der ersten Schicht versteht die Erfindung unter dem Begriff "interne Abhängigkeit" eine Referenz der jeweiligen ersten Schicht, vorzugsweise auf eine beliebige Hardware-Komponente, um auf diese Weise die Schicht in Abhängigkeit zu der jeweiligen Hardware-Komponente zu stellen.

Der Begriff "externe Abhängigkeit" drückt eine Abhängigkeit der jeweiligen Schicht vorzugsweise zu externen Software-Libraries aus. Unter dem Begriff "Software-Library" wird vorzugsweise, aber nicht ausschließlich, eine "Open Source" verstanden. Es können auch "Docker Images" oder "Helm-Charts" gemeint sein.

Die internen und/oder externen Abhängigkeiten werden in die Infrastruktur der Schichten-Architektur einkopiert. Im Rahmen des Master-Computers werden die internen und/oder externen Abhängigkeiten auf sogenannte Vulnerabilities (vorzugsweise CVEs) oder aber auf Lizenzkompatibilität geprüft.

Der Begriff "Integrationslogik" beschreibt, dass in der jeweiligen Schicht vorzugsweise eine Logik implementiert wird, um die jeweilige Komponente mit vorzugsweise wenigstens einem Cluster-Service zu integrieren. Der Begriff Integrationslogik umfasst darüber hinaus ein automatisiertes Monitoring der Verfügbarkeit und/oder eine Überwachung von Metriken. Zusätzlich ist auch eine Integration in ein zentralisiertes Log-Management umfasst. Zusätzlich kann auch eine Implementierung erforderlicher Logiken für die Installation, vorzugsweise von Softwareprogrammprodukten, gemeint sein.

Unter dem Begriff "Basiskonfiguration" versteht die Erfindung die Konfigurierung von sogenannten Use-Cases, mit deren Hilfe Projekte mit geringerem Zeitaufwand gestartet werden können.

Die sogenannte Basiskonfiguration kann vorzugsweise mit anderen Hardware-Komponenten oder mit Software-Komponenten zusammengeführt werden oder in andere Komponenten integriert werden. Eine Abhängigkeit zwischen der Basiskonfiguration und der jeweiligen Komponente ist jedoch nicht erforderlich.

Die Konfiguration wird in erprobtem und/oder getestetem Zustand vom Master-Computer auf den Slave-Computer übertragen.

Die vorgenannte erste Schicht ist vorzugsweise als Cluster-Service ausgebildet. Sie kann auch eine Basis-Komponente (Eine oder mehrere Basis-Komponenten werden in einem Nutzerservice - siehe nächste Schicht - referenziert und konfiguriert, um den nutzerindividuellen Teil zu konfigurieren und die IAM-Use-Cases zu realisieren. Sie stellen die Basis beziehungsweise Grundlage für höherwertige Komponenten dar.) sein.

Ein "Cluster-Service" wird von wenigstens zwei Schichten (sogenannten Service-Layers) betrieben. Ein Cluster-Service kann nutzerspezifisch ausgebildet sein.

Der Cluster-Service wird vorzugsweise, aber nicht ausschließlich als ein zentralisiertes "Logging-System" dargestellt. Der Cluster-Service kann auch ein automatisiertes Monitoring-System oder ein sogenannter "Tagger" sein.

Mithilfe des Taggers werden Resourcenauswertungen in Cloud-Umgebungen vorgenommen.

Wenigstens eine sogenannte Basis-Komponente kann mit der zweiten Schicht (bezeichnet: Nutzer-Service) referenziert und konfiguriert werden.

Mithilfe der Schicht der Schichten-Architektur "Nutzer-Service" wird der nutzerindividuelle Teil der jeweiligen Einheiten der Funktionalitäten konfiguriert. Gleichzeitig wird ein Identity und Access Management Use-Case realisiert.

### Zweite Schicht (bezeichnet: Nutzer-Service)

Die Schicht der Schichten-Architektur "Nutzer-Service" ist das Zentrum des Identity und Access Management Systems aus der jeweiligen Perspektive des Nutzers.

Sämtliche Daten und/oder Informationen, die nutzerspezifisch sind, werden in Form von Konfigurationen in der zweiten Schicht (bezeichnet: Nutzer-Service) gebündelt. Im Rahmen der zweiten Schicht der Schichten-Architektur (bezeichnet: Nutzer-Service) versteht die Erfindung unter dem Begriff "interne Referenzen", eine Referenz auf eine oder mehrere Basiskomponenten innerhalb der Schichten-Architektur.

Der Begriff "Konfiguration des Nutzers" umfasst eine vollständige nutzerspezifische Konfiguration nach den Erfordernissen und/oder Anforderungen des Nutzers. Hierbei kann die Basiskonfiguration durch weitere Daten und/oder Informationen des Nutzers ergänzt und insbesondere auch überschrieben werden.

Eine Ergänzung und/oder ein Überschreiben der Basiskonfiguration ermöglicht eine weitere Realisierung von individuellen Anforderungen des Nutzers.

Darüber hinaus können auch Codes oder Bestandteile von Codes der Konfiguration der Basiskomponenten überschrieben oder ergänzt werden.

Auf diese Weise wird eine umfassende Flexibilität innerhalb des Identity und Access Management Systems erreicht.

Unter dem Begriff "Installations-Abstraktion" (Deployment-Abstraktion) versteht die Erfindung, dass derjenige Teil der Konfiguration abstrahiert werden muss, der sich auf eine Umgebung bezieht.

Ein umgebungsspezifischer Teil der Konfiguration unterscheidet sich je nach Fortschritt der Installation.

Beispielhaft, aber in keiner Weise ausschließlich, wird die URL, unter der das Identity und Access Management System erreichbar ist, in Abhängigkeit des Systems unterschiedlich zu konfigurieren sein.

Infolgedessen erfolgt die Konfiguration nicht in der vorgenannten zweiten Schicht (bezeichnet: Nutzer-Service).

Vielmehr wird dieser Teil der Konfiguration als eine Umgebungsvariable abstrahiert. Die Konfiguration erfolgt erst zum Zeitpunkt der Installation des Systems.

Die gleichen Artefakte werden somit in unterschiedlichen Umgebungen genutzt.

Auf diese Weise wird die Sicherung der Qualität über eine Vielzahl von Installationen gewährleistet.

Eine Abstraktion des Teils der Konfiguration umfasst vorzugsweise Passwörter von einzelnen Systemen oder Versionen.

Die sogenannte Nutzerkomponente ist eine logische Komponente. Die logische Komponente kann wenigstens zwei sogenannte "Untersysteme und/oder Unterkomponenten" umfassen. Die Untersysteme und/oder Unterkomponenten stellen ein komplexes Gesamtsystem dar.

Die Zusammenfassung der Nutzer-Service-Schicht zu einer Nutzerkomponente ermöglicht eine Unterteilung des Identity und Access Management Systems in unterschiedliche Versionen.

Das Gesamtsystem kann auf andere Umgebungen (Stages) übertragen werden.

Das Gesamtsystem kann aber auch in einer einzelnen Stage zur Verfügung.

### Dritte Schicht (bezeichnet: Nutzer-Stage)

Die dritte Schicht (bezeichnet: Nutzer-Stage) wird für jede Phase des Identity und Access Management Systems durchlaufen, die der Nutzer jeweils benötigt.

Die erste Schicht (Komponente) und die zweite Schicht (Nutzer-Service) betreffen im Wesentlichen wenigstens ein Softwareprogrammprodukt (Software-Artefakte).

Die dritte Schicht "Nutzer-Stage" umfasst vorzugsweise, aber nicht ausschließlich, Hardware-Komponenten. Hardware-Komponenten sind vorzugsweise, aber nicht ausschließlich, das Rechenwerk und/oder das Speicherwerk und/oder die wenigstens eine Arbeitskomponente des jeweiligen Computers.

Mit der dritten Schicht (bezeichnet: Nutzer-Stage) werden vorzugsweise Einheiten der Funktionalität des Rechenwerks und/oder des Speicherwerks und/oder der weiteren Arbeitskomponente des Master-Computers vom Master-Computer zum Slave-Computer übertragen.

Die Übertragung erfolgt dabei in codierter Form.

Die dritte Schicht (bezeichnet: Nutzer-Stage) führt beim Slave-Computer zu einem lauffähigen und benutzbaren Identity und Access Management System.

Im Rahmen der dritten Schicht versteht die Erfindung unter dem Begriff "Infrastruktur-Konfiguration" den Fall eines Systems, bei dem wenigstens eine Laufzeitumgebung (Kubernetes) vorgesehen ist.

Die Laufzeitumgebung wird mittels eines Codes konfiguriert. Hierbei liegt ein sogenannter "Infrastructure-as-Code"-Ansatz vor.

Die Infrastruktur-Konfiguration umfasst die Konfiguration von wenigstens zwei Zugriffen auf mindestens zwei Infrastrukturkomponenten.

Innerhalb der Infrastruktur-Konfiguration werden die Art der genutzten Ressourcen und die für die automatische, elastische Skalierung relativ zur Laufzeit gesetzten Limits nach den Bedürfnissen und/oder nach den Anforderungen des Nutzer konfiguriert.

Vorzugsweise, aber nicht ausschließlich wird festgestellt, wie viele sogenannte "Worker-Nodes", bei hoher Last, in Clustern und dynamisch, vorzugsweise in einer Cloud-Umgebung, hinzugebucht werden können.

Im Rahmen der dritten Schicht (bezeichnet: Nutzer-Stage), versteht die Erfindung unter dem Begriff einer "Cluster-Services-Konfiguration" eine Referenz der zu nutzenden Cluster-Services zueinander.

Es werden für die jeweils genutzten Cluster-Services diejenigen Teile, die Stage-spezifisch sind, konfiguriert.

Beispielsweise, aber in keiner Weise umfassend, wird ein automatisiertes Monitoring aktiviert. Durch die spezifische Konfiguration der Stages erfolgt eine Alarmierung, vorzugsweise eines Support-Personals, nur in der produktiv genutzten Stage, nicht aber beispielsweise in testweise genutzten Stages.

Im Rahmen des Begriffs "Nutzer-Service-Konfiguration" werden die Daten und/oder Informationen konfiguriert, die vorzugsweise in einer Unterschicht "Deployment-Abstraktion" konfiguriert worden waren.

Im Rahmen der Nutzer-Service-Konfiguration können vorzugsweise Ressourcen-Limits einzelner Komponenten überschrieben werden.

Beispielhaft, aber in keiner Weise umfassend, werden von den Komponenten in einer weiteren Stage-"Produktion" mehr Ressourcen in Anspruch genommen, als in einer weiteren Schicht "Quality-Assurance-Stage".

### Darstellung einer Schichten-Architektur am Beispiel einer automatischen Registrierung für ein Monitoring

In dem vorliegenden Beispiel wird davon ausgegangen, dass jede Komponente eine Schnittstelle zur jeweiligen Außenumgebung aufweist.

Es wird weiter davon ausgegangen, dass die erste Schicht (bezeichnet: Komponente) eine Unterschicht "Integrationslogik" umfasst.

In der Unterschicht "Integrationslogik" der ersten Schicht wird definiert, wie die erste Schicht überwacht wird. Es wird weiter definiert, in welchen Fällen Alarme ausgesendet werden sollen.

Es ist ein Cluster-Service "Active Monitor Watcher" vorgesehen, der eine Installation in einem Cluster überwacht.

Werden in dem Identity und Access Management System weitere zusätzliche Services hinzugefügt, wird die Konfiguration dynamisch ausgewertet. Über ein API wird die dynamisch ausgewertete Konfiguration bei einem externen Monitoring-Service registriert.

Die so installierte Komponente wird automatisch überwacht.

In Abhängigkeit von der jeweiligen Nutzer-Konfiguration werden Alarmmeldungen bei spezifischen Problemen direkt an das Support-Personal gesendet.

Dies erweist sich als besonders vorteilhaft, da nicht für jeden Nutzer individuell ein komplettes Monitoring-System aufgesetzt werden muss. Vielmehr kann der Cluster-Service "Active Monitor Watcher" auf den jeweils vorliegenden aktuellen Ist-Zustand reagieren. Erforderliche Konfigurationen werden automatisch vorgenommen.

Der Cluster-Service "Active Monitor Watcher" erweist sich als äußerst vorteilhaft, da Verfügbarkeiten und Nicht-Verfügbarkeiten von exponierten Endpunkten automatisch überwacht werden können.

Vorzugsweise, aber nicht ausschließlich, wird der Cluster-Service durch einen sogenannten "Health-Service" ergänzt.

Der sogenannte "Health-Service" erlaubt es, in einer vorzugsweise deskriptiven und/oder menschenlesbaren Sprache Testfälle für das Gesamtsystem zu beschreiben. Dies kann beispielsweise, aber nicht ausschließlich, die Sprache Gurkin sein.

Die Testfälle für das Gesamtsystem gehen dabei über eine reine Verfügbarkeitsprüfung hinaus.

Beispielhaft und ebenfalls nicht umfassend kann ein Single-Sign-On-Szenario über mehrere Systeme hinweg getestet werden.

Der "Health-Service" ermöglicht es für den Nutzer, sogenannte Performance-Zielwerte für Antwortzeiten von Komponenten vorzugeben.

Zur Validierung von sogenannten Service-Level-Agreements können unter Rückgriff auf eine menschenlesbare Sprache, Tests durchgeführt werden, mit der die Service-Level-Agreements validiert werden können.

Die Validierung kann jeweils gemeinsam mit dem Nutzer vorgenommen werden.

Die Validierung kann auch automatisiert abgeprüft werden.

Mithilfe des vorgenannten "Active-Monitor-Watchers" kann der Health-Service Testfälle automatisch überwachen lassen. Mithilfe des "Active-Monitor-Watchers" können an ein zur Verfügung stehendes Support-Personal Alarmsignale ausgesandt werden.

Zusätzlich können vom Support-Personal sogenannte Reporting-Werte zurückgemeldet werden.

### Global token processing

Identity und Access Management Systeme aus verschiedenen Ländern oder Regionen weisen unabhängig voneinander jeweils wenigstens einen Token auf.

Die jeweiligen Token der unterschiedlichen Länder oder Regionen sind inkompatibel zueinander.

Zum Entschlüsseln der jeweiligen nationalen oder regionalen Token müssen weltweit Schlüssel verteilt werden.

Die Verteilung solcher Schlüssel stellt ein besonderes Sicherheitsrisiko dar. Der Austausch von Daten innerhalb derartiger Tokens zwischen einzelnen Ländern und/oder Regionen kann aus rechtlichen Gründen unzulässig sein.

Diese weltweite Überprüfung erfolgt ohne personenbezogene Daten zwischen den jeweiligen Ländern und/oder Regionen replizieren zu müssen.

### Intelligent User Roaming

Die Erfindung sieht vor, dass im Rahmen des Identity und Access Management Systems, Daten und/oder Informationen in wenigstens zwei Bereiche unterteilt werden.

Ein erstes Profil ist dabei vorzugsweise vom Nutzer im Klartext lesbar. Die Lesbarkeit umfasst jedoch nicht Passwörter und hinterlegtes Wissen.

Erfindungsgemäß ist ein globales Profil vorgesehen.

Das globale Profil umfasst wenigstens zwei Attribute des lokalen Profils.

Die Attribute des lokalen Profils können im globalen Profil in einer nicht wieder herstellbaren und/oder einer nicht lesbaren Form ausgebildet sein. Hierbei handelt es sich um einen sogenannten Hash.

Das globale Profil umfasst vorzugsweise, aber nicht ausschließlich, sogenannte eineindeutige Identifizierer.

Beispielhaft, aber nicht ausschließlich, muss zur Durchführung eines Logins in wenigstens einer anderen Region ein sogenannter Hash eines Login-Namens eingegeben werden.

Der Hash des Login-Namens bezeichnet dabei insbesondere einen Wert, den der Nutzer beim Einloggen eintippt. Dies kann insbesondere die E-Mail-Adresse oder die Mobilfunknummer des Nutzers sein.

Darüber hinaus ist ein sogenannter Hash des Passwortes vorzusehen.

Das lokale Profil kann um weitere, insbesondere nutzerspezifische, Attribute ergänzt werden. Auf diese Weise können sich Nutzer auch in anderen Regionen mit dem System der jeweiligen Region verbinden, ohne dass das vollständige Profil übertragen und gespeichert werden muss. Die digitalen Services des Nutzers können so ohne Abstriche bspw. auf Reisen genutzt werden.

### Automatische Erkennung einer LDAP-Topologie für eine Replikation

Im Rahmen der Schicht-Architektur kann ein sogenannter "Topologie-Konfigurator" vorzugsweise in einer Unterschicht der Schicht "Komponente" eingebaut werden.

Die Unterschicht ist dabei als "Integrationslogik" ausgebildet.

Ein derartiger Topologie-Konfigurator wird vorzugsweise beim Start eines sogenannten Pods ausgeführt. Mithilfe des Topologie-Konfigurators wird ein Soll-Ist-Vergleich durchgeführt.

Mithilfe des Soll-Ist-Vergleichs wird die Rolle eines sogenannten Pods im vorliegenden Identity und Access Management System erkannt und konfiguriert.

Der Topologie-Konfigurator führt weitere Schritte aus, damit der sogenannte Pod vorzugsweise vorhandene Daten löschen kann und/oder Backups von anderen Systemen herstellen kann.

Auf diese Weise kann ein Pod dynamisch auf die vorhandene Situation der Laufzeitumgebung und anderer Pods, die zum selben LDAP-Cluster gehören, reagieren. Er kann selbstständig feststellen ob er in der Rolle Master oder Slave benötigt wird und abhängig davon seine Konfiguration dynamisch selbst vornehmen.

Es versteht sich von selbst, dass der Pod auch andere Funktionen umfassen kann.

## Patentansprüche

1. Verfahren zur Ausführung eines Identity und Access Management Systems, bei dem wenigstens eine Schicht vorgesehen ist und ein Master-Computer mit wenigstens einem Slave-Computer kommuniziert,
- wobei der Master-Computer wenigstens eine Komponente umfasst, die jeweils als ein Rechenwerk und/oder als ein Speicherwerk und/oder als wenigstens eine Arbeitskomponente ausgebildet ist, wobei
- jeweils Einheiten der Funktionalität des Rechenwerks und/oder des Speicherwerks und/oder der weiteren Arbeitskomponente des Master-Computers erzeugt werden, und
- die jeweiligen Einheiten der Funktionalität des Rechenwerks und/oder des Speicherwerks und/oder der Funktionalität der weiteren Arbeitskomponente in einen Code übersetzt werden und in codierter Form vom Master-Computer zum Slave-Computer übertragen werden,
- wobei der Master-Computer mit Hilfe des Rechenwerks gesteuert wird, und zur Steuerung wenigstens ein Softwareprogrammprodukt arbeitet, wobei
- jeweils Einheiten der Funktionalität des Softwareprogrammprodukts in einen Code übersetzt werden und in codierter Form vom Master-Computer zum Slave-Computer übertragen werden,
- wobei das Rechenwerk und/oder das Speicherwerk und/oder die weitere Arbeitskomponente und/oder das Softwareprogrammprodukt des Master-Computers in Abhängigkeit wenigstens eines Parameters des wenigstens einen Slave-Computers konfiguriert werden, und
- die jeweilige Konfigurierung in einen Code übersetzt wird und in codierter Form vom Master-Computer zu dem Slave-Computer übertragen wird,
- wobei in einem Speicherwerk des Slave-Computers Daten und/oder Informationen eines Nutzers abgespeichert werden, und
- in einem Rechenwerk des Slave-Computers aus den Daten und/oder aus den Informationen ein persönliches Profil zur Identifizierung und/oder zur Authentifizierung und/oder zu Autorisierung des Nutzers erstellt wird,
- wobei die in einen Code übersetzten Einheiten der Funktionalität des Rechenwerks und/oder des Speicherwerks und/oder die in einen Code übersetzten Einheiten der Funktionalität der weiteren Arbeitskomponente und/oder des Softwareprogrammprodukts und/oder die Konfiguration vom Master-Computer in das Rechenwerk und/oder in das Speicherwerk und/oder in die weitere Arbeitskomponente sowie in wenigstens eine Laufzeitumgebung (Kubernetes) des Slave-Computers übertragen werden,
- wobei die Daten und/oder Informationen des Nutzers im Rechenwerk und/oder im Speicherwerk und/oder in der weiteren Arbeitskomponente des Slave-Computers mit Hilfe der übertragenen Funktionalitäten des Softwareprogrammprodukts be- und/oder verarbeitet werden,
- und die vom Master-Computer zum Slave-Computer übertragenen, in einen Code übersetzten Einheiten der Funktionalitäten auf das Rechenwerk und/oder das Speicherwerk und/oder auf die weitere Arbeitskomponente und/oder auf das Softwareprogrammprodukt des Slave-Computers einwirken.

2. Verfahren nach Anspruch 1, **dadurch gekennzeichnet, dass** wenigstens zwei Codes in wenigstens einer Codespeichereinrichtung (Code-Repository) gespeichert wird.

3. Verfahren nach Anspruch 1, **dadurch gekennzeichnet, dass** der wenigstens eine Code mit Hilfe vorgegebener Regeln kontinuierlich bereitgestellt und/oder kontinuierlich integriert wird (CI/CD).

4. Verfahren nach Anspruch 1 oder 2, **dadurch gekennzeichnet, dass** die Komponenten und/oder die Codespeichereinrichtung und/oder die Regeln und/oder die übersetzten Einheiten und/oder das wenigstens eine Softwareprogrammprodukt und/oder der wenigstens eine Codes und/oder der wenigstens eine Parameter und/oder die wenigstens eine Laufzeitumgebung jeweils in mindestens zwei voneinander abweichenden Schichten strukturiert werden.

5. Verfahren nach Anspruch 1, **dadurch gekennzeichnet, dass** der wenigstens eine Code mit Hilfe einer vorgegebenen Automatisierungsinfrastruktur bereitgestellt und/oder integriert wird.

6. Verfahren nach Anspruch 1, **dadurch gekennzeichnet, dass** der wenigstens eine Code mit Hilfe einer sogenannten Templating-Language be- und verarbeitet wird.

7. Verfahren nach Anspruch 1, **dadurch gekennzeichnet, dass** der Code eine Textdatei ist und/oder einer vorgegebenen Semantik folgt.

8. Verfahren nach Anspruch 4, **dadurch gekennzeichnet, dass** die mindestens eine Einheit der Funktionalität des Softwareprogrammprodukts nach einer internen Abhängigkeit und/oder nach einer externen Abhängigkeit und/oder nach einer Integrationslogik und/oder nach einer Basiskonfiguration getrennt, in Schichten strukturiert werden.

9. Verfahren nach Anspruch 1, **dadurch gekennzeichnet, dass** die mindestens eine Einheit der Funktionalität des Rechenwerks und/oder die mindestens eine Einheit der Funktionalität des Speicherwerks und/oder die mindestens eine Einheit der Funktionalität der Arbeitskomponenten und/oder die mindestens eine Einheit der Funktionalität des Softwareprogrammprodukts wenigstens nach einer internen Referenz und/oder nach einer Nutzerkonfiguration und/oder nach einer Deployment-Abstraktion getrennt, in Schichten strukturiert werden.

10. Verfahren nach Anspruch 1, **dadurch gekennzeichnet, dass** die mindestens eine Einheit der Funktionalität des Rechenwerks und/oder die mindestens eine Einheit der Funktionalität des Speicherwerks und/oder die mindestens eine Einheit der Funktionalität der Arbeitskomponente und/oder die mindestens eine Einheit der Funktionalität des Softwareprogrammprodukts in Abhängigkeit wenigstens einer Infrastruktur-Konfiguration und/oder wenigstens einer Cluster-Service-Konfiguration und/oder wenigstens einer Nutzerservice-Konfiguration, in Schichten strukturiert werden.

11. Verfahren nach Anspruch 1, **dadurch gekennzeichnet, dass** die Einheiten der Funktionalitäten und/oder die Konfigurierung vor oder während oder nach der Übertragung adaptiert werden.

12. Verfahren nach Anspruch 1, **dadurch gekennzeichnet, dass** die Übertragung der Einheiten der Funktionalitäten und/oder der Konfigurierung einzeln oder in Paketen erfolgt.

13. Verfahren nach Anspruch 1, **dadurch gekennzeichnet, dass** die Einheiten der Funktionalitäten vor oder während oder nach der Übertragung skaliert werden.

14. Verfahren nach Anspruch 1, **dadurch gekennzeichnet, dass** durch die Übertragung der, in wenigstens einen Code übersetzten Einheit der Funktionalität, die Kapazität des Rechenwerks und/oder des Speicherwerks und/oder der weiteren Arbeitskomponente und/oder des Softwareprogrammprodukts des Slave-Computers erweitert und/oder verändert wird.

15. Verfahren nach Anspruch 1, **dadurch gekennzeichnet, dass** die vom Master-Computer zum Slave-Computer übertragenen Einheiten der Funktionalitäten jeweils als eine Service-Leistung ausgebildet wird, die jeweils an dem Rechenwerk und/oder an dem Speicherwerk und/oder an der weitere Arbeitskomponente vorgenommen wird.

16. Verfahren nach Anspruch 1, **dadurch gekennzeichnet, dass** die Übertragung vom Master-Computer zum Slave-Computer automatisch erfolgt.

17. Verfahren nach Anspruch 1, **dadurch gekennzeichnet, dass** die Laufzeitumgebung wenigstens eine Funktion umfasst, mit der vorzugsweise ein Monitoring und/oder eine Ablaufprüfung und/oder ein Debuggingprozess und/oder eine Codegenerierung und/oder eine Codeoptimierung und/oder eine Schnittstelle ausgeführt wird.

18. Verfahren nach Anspruch 1, **dadurch gekennzeichnet, dass** die Übertragung der Einheiten der Funktionalitäten und/oder der Konfigurierung vom Master-Computer zum Slave-Computer auf allen Laufzeitumgebungen zeitgleich und/oder automatisch erfolgt.

19. Verfahren nach Anspruch 1, **dadurch gekennzeichnet, dass** die wenigstens zwei Laufzeitumgebungen parallel oder seriell nebeneinander angeordnet werden.

20. Verfahren nach Anspruch 1, **dadurch gekennzeichnet, dass** die Laufzeitumgebungen an lokal voneinander abweichenden Orten angeordnet werden.

21. Verfahren nach Anspruch 1, **dadurch gekennzeichnet, dass** die Laufzeitumgebungen an lokal voneinander abweichende Parameter angepasst werden.

22. Verfahren nach Anspruch 1, **dadurch gekennzeichnet, dass** das Identity und Access Management System als Container, vorzugsweise als Micro-Service, ausgebildet ist.

23. Verfahren nach Anspruch 1, **dadurch gekennzeichnet, dass** die Laufzeitumgebungen in Cluster von Laufzeitumgebungen (Kubernetes-Cluster) konfiguriert werden.

24. Verfahren nach Anspruch 1, **dadurch gekennzeichnet, dass** das Softwareprogrammprodukt eine Systemsoftware oder eine Unterstützungssoftware oder eine Anwendungssoftware ist.

25. System zur Ausführung des Verfahrens nach einem oder mehreren der vorausgegangenen Ansprüche, **dadurch gekennzeichnet, dass** ein Master-Computer mit wenigstens einem Slave-Computer kommuniziert,
- wobei der Master-Computer wenigstens eine Komponente umfasst, die jeweils als ein Rechenwerk und/oder als ein Speicherwerk und/oder als wenigstens eine Arbeitskomponente ausgebildet ist, wobei
- jeweils Einheiten der Funktionalität des Rechenwerks und/oder des Speicherwerks und/oder der weiteren Arbeitskomponente des Master-Computers erzeugt werden, und
- die jeweiligen Einheiten der Funktionalität des Rechenwerks und/oder des Speicherwerks und/oder der Funktionalität der weiteren Arbeitskomponente in einen Code übersetzt werden und in codierter Form vom Master-Computer zum Slave-Computer übertragen werden,
- wobei der Master-Computer mit Hilfe des Rechenwerks gesteuert wird, und zur Steuerung wenigstens ein Softwareprogrammprodukt arbeitet, wobei
- jeweils Einheiten der Funktionalität des Softwareprogrammprodukts in einen Code übersetzt werden und in codierter Form vom Master-Computer zum Slave-Computer übertragen werden,
- wobei das Rechenwerk und/oder das Speicherwerk und/oder die weitere Arbeitskomponente und/oder das Softwareprogrammprodukt des Master-Computers in Abhängigkeit wenigstens eines Parameters des wenigstens einen Slave-Computers konfiguriert werden, und
- die jeweilige Konfigurierung in einen Code übersetzt wird und in codierter Form vom Master-Computer zu dem Slave-Computer übertragen wird,
- wobei in einem Speicherwerk des Slave-Computers Daten und/oder Informationen eines Nutzers abgespeichert werden, und
- in einem Rechenwerk des Slave-Computers aus den Daten und/oder aus den Informationen ein persönliches Profil zur Identifizierung und/oder zur Authentifizierung und/oder zu Autorisierung des Nutzers erstellt wird,
- wobei die in einen Code übersetzten Einheiten der Funktionalität des Rechenwerks und/oder des Speicherwerks und/oder die in einen Code übersetzten Einheiten der Funktionalität der weiteren Arbeitskomponente und/oder des Softwareprogrammprodukts und/oder die Konfiguration vom Master-Computer in das Rechenwerk und/oder in das Speicherwerk und/oder in die weitere Arbeitskomponente sowie in wenigstens eine Laufzeitumgebung (Kubernetes) des Slave-Computers übertragen werden,
- wobei die Daten und/oder Informationen des Nutzers im Rechenwerk und/oder im Speicherwerk und/oder in der weiteren Arbeitskomponente des Slave-Computers mit Hilfe der übertragenen Funktionalitäten des Softwareprogrammprodukts be- und/oder verarbeitet werden,
- und die vom Master-Computer zum Slave-Computer übertragenen, in einen Code übersetzten Einheiten der Funktionalitäten auf das Rechenwerk und/oder das Speicherwerk und/oder auf die weitere Arbeitskomponente und/oder auf das Softwareprogrammprodukt des Slave-Computers einwirken.
